# EUROPÄISCHE PATENTSCHRIFT

(11) **EP 1 351 823 B1**
(45) Veröffentlichungstag und Bekanntmachung des Hinweises auf die Patenterteilung: **25.03.2009**
(21) Anmeldenummer: 01985848.9
(22) Anmeldetag: 05.12.2001
(51) Int. Cl.: B32B 27/32, G09F 3/04, B29C 55/02

(54) **ETIKETTENFOLIE MIT VERBESSERTER HAFTFÄHIGKEIT**
LABEL FILM WITH IMPROVED ADHESION
FEUILLE POUR ETIQUETTE A FORCE D'ADHERENCE AMELIOREE

(30) Priorität: 06.12.2000 DE 10060504; 13.06.2001 DE 10128711
(43) Veröffentlichungstag der Anmeldung: 15.10.2003
(73) Patentinhaber: Treofan Germany GmbH & Co.KG, 66539 Neunkirchen (DE)
(72) Erfinder: HOLZER, Susanne, 66564 Ottweiler (DE); WIENERS, Gerhard, 60230 Frankfurt (DE); LAUER, Albert, 66538 Neunkirchen (DE)
(86) Internationale Anmeldenummer: PCT/EP2001/014278
(87) Internationale Veröffentlichungsnummer: WO 2002/045956

(56) Entgegenhaltungen:
- EP-A- 0 367 613
- WO-A-00/21854
- WO-A-98/14491
- GB-A- 2 223 446
- US-A- 5 242 650
- US-A- 6 150 013
- PATENT ABSTRACTS OF JAPAN vol. 1996, no. 12, 26. Dezember 1996 (1996-12-26) & JP 08 207214 A (MITSUI PETROCHEM IND LTD), 13. August 1996 (1996-08-13)

## Beschreibung

Die Erfindung betrifft die Verwendung einer biaxial orientierten Folie aus thermoplastischen Kunststoffen für Etiketten mit verbesserter Haftung gegen verschiedene Materialien, die Etiketten selbst, als auch Verfahren zur Herstellung der Etiketten.

Lebensmittel und andere Packgüter werden häufig in steif-wandigen Behältern verpackt, die bereits bei der Herstellung mit einem Etikett nach dem "In-Mould Labeling" oder "IML-Verfahren" versehen werden. Hierbei wird, meist von einem Roboter, ein Etikett so in die geöffnete Form eingelegt, daß die bedruckte (Außen-)Seite des Etiketts an der Formwand anliegt, die unbedruckte (Innen-Seite) dem zu formenden Behälter zugewandt ist. Ein glattes faltenfreies Anliegen des Etiketts in der Form wird beispielsweise durch ein Vakuum erzielt, das an feine Entlüftungsbohrungen angelegt wird, wobei die Bohrungen vom Etikett weitgehend verschlossen werden. Oder elektrostatische Kräfte zwischen dem elektrostatisch geladenen Etikett und der geerdeten Form sorgen für das glatte Anliegen des Etiketts.

Der Vorzug des IML-Verfahrens liegt darin, daß die Druckqualität der separat hergestellten Etiketten wesentlich besser ist als die direkte Bedruckung der Behälter. Die Aufbringung des Etiketts beim Formen des Behälters ist kostengünstig und effektiv. Man benötigt keine Kleber, keine beschichteten Trägerfolien oder -papiere und spart somit die Entsorgung von Abfall und Reststoffen. Das In-Mould-Etikettierverfahren läßt sich mit verschiedenen Herstellverfahren für Behälter kombinieren. Varianten des IML-Verfahrens wurden z.B. für Spritzguß, Dünnwandspritzguß, Blasformen sowie das Tiefziehen oder Thermoformen und das Spritzstreckblasen von Behältnissen vorgeschlagen oder bereits entwickelt.

Des weiteren sind Verfahren zur Etikettierung von Behältern nach deren Herstellung oder nach deren Befüllung bekannt, wie z.B. die RundumEtikettierung, Patch-Labeling, Selbstklebeetiketten sowie das "Thermolabeling".

Thermolabeling umfaßt alle Verfahren bei denen ein Etikett unter Einwirkung von Wärme auf ein Behältnis aufgebracht wird. Beispielsweise kann der bereits geformte Behälter in einem geeigneten Verfahren erhitzt und das Etikett mit Druck oder mit Hilfe von Bürsten oder Walzen so an die Behälterwandung angedrückt werden, daß es anschließend mit dem Behälter fest verbunden ist.

Sowohl beim In-Mould-Etikettieren als auch beim Thermolabeling ist eine blasenfreie Applikation des Etiketts eine wichtige und zugleich problematische Anforderung. Um dies zu erreichen wird häufig die innere, d.h. die dem Behältnis zugewandte Oberfläche der Etikettenfolie strukturiert oder aufgerauht, damit der Austritt von Luft aus dem Spalt zwischen Etikett und Behälterwand erleichtert wird.

Das Etikett wird bei einfachen Etikettenformen meist in Rollenform zugeführt und an der Maschine, in der der Behälter ausgeformt wird, zugeschnitten (Cut in place). Dieses Verfahren bietet sich insbesondere bei einfachen, z.B. rechteckigen Zuschnitten der Etiketten an, wie sie insbesondere in der Wrap-Around-Labelling-(WAL) und Patch-Etikettierung von im wesentlichen zylinderförmigen Behältern und Flaschen zum Einsatz kommen.

Bei komplexeren Umrissen wird das Etikett häufig vorab zugeschnitten, in Magazinen gestapelt, später an der Etikettiermaschine vom Stapel vereinzelt und in die Form eingelegt (Cut & stack-Verfahren). Dabei werden die Etiketten z.B. zunächst nach dem sogenannten Bogenoffset-Verfahren oder anderen geeigneten Verfahren bedruckt und unmittelbar nach dem Druckvorgang auf ihre endgültige Form zugeschnitten. Sowohl die unbedruckten wie die bedruckten Bogen und Etiketten müssen sich in den einzelnen Verfahrensschritten Bogenzuschnitt, Druck, Etikettenzuschnitt und Zuführung zur Etikettierung problemlos verarbeiten lassen. Der Bogen und das Etikett werden gestapelt und entstapelt. Dabei müssen die Folien leicht gegeneinander gleiten und sie dürfen sich nicht elektrostatisch aufladen. Neben der Ausrüstung der Etikettenfolie mit Gleitmittel und Antistatika ist daher eine entsprechende Strukturierung der Folienoberfläche erforderlich.

Für die Herstellung der Behälter werden unterschiedliche Materialien wie z.B. Polypropylen (PP), Polyethylen hoher bzw. niedriger Dichte (HD-PE bzw. LD-PE oder LLD-PE, Polystyrol (PS), Polyvinylchlorid (PVC), Polyethylenterephthalat PET; Polycarbonat (PC) und in Einzelfällen auch Mischungen solcher Polymerer eingesetzt. Hieraus ergeben sich unterschiedliche Anforderungen an die Etikettenmaterialien hinsichtlich Festigkeit, Dehnbarkeit, Steifigkeit, Glanz/Mattheit und Haftung auf der Behälterwandung. Aus Kostengründen werden biaxial orientierte Polypropylenfolien (boPP-Folien) bevorzugt eingesetzt, wobei diese Anwendungen derzeit auf Behälter aus Polypropylen und Polyethylen beschränkt sind.

Die herkömmlichen boPP-Etiketten haften, auch bei erhöhten Temperaturen, auf den übrigen genannten Behältermaterialien schlecht. Es ist nicht möglich Etiketten aus boPP-Folie auf Behälter aus PET, PS, PC oder PVC mittels In-Mould- oder Thermolabelling-Verfahren aufzubringen. Insbesondere ist es bisher nicht gelungen, boPP-Folien im Spritzguß-IML-Verfahren auf Polystyrol zum Einsatz zu bringen. Ebensowenig gelingt es, Etikettenfolien aus boPP-Folien im Thermolabeling-Verfahren auf PET-Flaschen einzusetzen. Hier müssen entsprechende Kleber zur Anheftung des Etiketts appliziert werden. Trotz umfangreicher Versuche verschiedene Behältermaterialien und verschiedene Etikettenmaterialien mit den diversen bekannten Etikettierverfahren zu kombinieren, bleibt die Auswahl der erfolgreichen Kombinationen sehr beschränkt. Der direkte Einsatz von boPP-Folien im IML-oder dem Thermolabeling-Verfahren für die Etikettierung von Behältern, die nicht aus PP oder PE bestehen, ist bis jetzt nicht möglich. Für die Haftung von boPP-Etiketten auf PS, PET, PC, PVC etc. sind Kleber, Beschichtungen, Lacke oder ähnliche Hilfsmittel erforderlich, welche nachträglich, d.h. nach der Herstellung der Folie, in einem zusätzlich Verarbeitungsschritt aufgebracht werden müssen. Dies verteuert zum einen das Etikett und hat manchmal nachteiligen Einfluß auf die übrigen Gebrauchseigenschaften.

Aus der britischen Anmeldung GB 2 223 446 ist eine boPP-Folie bekannt, die aus mindestens zwei Schichten besteht, wobei die vergleichsweise dünnere Schicht aus einem Blend aus einem Material, das eine geringe Siegelnahtfestigkeit gegen PVDC aufweist, und einem Material, das aus einem Copolymer aus einem Alken und einer ungesättigten einbasigen Säure bzw. deren Ester besteht. In bevorzugten Ausführungsformen kommen als Materialien mit einer niedrigen Siegelnahtfestigkeit gegen PVDC Polyethylene hoher und niedriger Dichte in Betracht, als Copolymere solche des Ethylens mit Acrylsäureestern, wobei diese Copolymere in besonders bevorzugten Ausführungsformen ungesättigte zweibasige Säuren oder deren Anhydride wie z.B. Maleinsäureanhydrid als weitere Monomere enthalten können. Entsprechende Co- bzw. Terpolymere wurden in der EP 0 065 898 beschrieben.

Bei der Nacharbeitung der britischen Anmeldung GB 2 223 446 wurde festgestellt, daß das dort beschriebene Verfahren unter Verwendung der dort angegebenen Rezepturen in einem hohen und für die industrielle Praxis unerträglichen Maße zu Ablagerungen auf den Heiz- und Streckwalzen des Längsstreckwerks einer sequentiellen BOPP-Anlage führt. Variationen im Rahmen der offenbarten Lehre erbrachten keinen oder nur einen geringfügigen Vorteilbzgl. Menge und Geschwindigkeit des aufgebauten Walzenbelags oder andere Gebrauchseigenschaften wurden nachteilig beeinflusst.

DE 198 36 657 beschreibt eine mehrschichtige siegelfähige Folie mit einer wachshaltigen Zwischenschicht. Das Wachs verbessert die für Verpackungen wichtige Barriereeigenschaften und hat ein Molekulargewicht Mn von 200 bis 1200. Die Modifizierung der Deckschichten durch Zusatz von Wachs ist nicht beschrieben. Eine Verwendung dieser Folien als Etikettenfolie oder in einem Laminat gegen Papier ist nicht erwähnt.

Die Aufgabe der vorliegenden Erfindung bestand darin, eine biaxial orientierte Polyolefinfolie zur Verfügung zu stellen, die kostengünstig ist und als Etikettenfolie vielfältig eingesetzt werden kann. Die Folie soll insbesondere mittels IML-oder desThermolabeling-Verfahren auf Behältnisse aus verschiedenen Materialien, wie z. B. PP, PE PET, PS, PC, PVC etc. aufzubringen sein und eine gute Haftung aufweisen. Natürlich ist es erforderlich, dass sich die Folie ohne Bildung von Ablagerungen auf den Walzen desLängsstreckwerks herstellen lässt. Darüber hinaus sollen die anderen wichtigen Gebrauchseigenschaften und die Optik der Folie, bzw. des daraus hergestellten Etiketts nicht nachteilig beeinflusst werden. Insbesondere soll die Folie einseitig bedruckbar sein und im Verarbeitungsprozess gut zu stapeln und zuentstapeln sein.

Diese Aufgabe wird gelöst durch eine Etikettenfolie aus einer biaxial orientierten mehrschichtigen coextrudierten Polyolefinfolie aus einer Basisschicht und mindestens einer inneren Deckschicht, wobei die Basisschicht und die innere Deckschicht gemeinsam und gleichzeitig durch eine Mehrschichtdüse extrudiert und anschließend zusammen biaxial verstreckt werden und wobei die innere Deckschicht mindestens 70 Gew.-% eines Co- oder Terpolymeren, welches mindestens aus Olefin und ungesättigter Carbonsäure oder deren Estern oder deren Anhydrid aufgebaut ist, und höchstens 30 Gew.-% eines Zusatzstoffes enthält, wobei sich die Angaben in Gew.-% jeweils auf das Gewicht der inneren Deckschicht beziehen. Die Unteransprüche geben bevorzugte Ausführungsformen der Erfindung an.

Im Rahmen der vorliegenden Erfindung wurde überraschenderweise gefunden, dass die innere Deckschicht aus den genannten Co-und/oder Terpolymeren I eine hervorragende Haftung als Etikett gegenüber den verschiedensten Polymer-Materialien, aus denen üblicherweise Behälter geformt werden, aufweist. Damit kann erstmals ein Material zur Verfügung gestellt werden, welches überraschenderweise zur Etikettierung von Behälter aus PP oder PE oder PVC oder PET oder PC oder PS nach dem Thermolabelling- oder dem In-Mould-Verfahren gleichermaßen erfolgreich eingesetzt werden kann. Dabei wurde gefunden, daß eine geringe Menge eines Zusatzstoffes in der inneren Deckschicht aus Co- oder Terpolymer I Walzenablagerungen bei der Herstellung der Folie wirksam verhindert und gleichzeitig die gewünschten guten und vielfältigen Hafteigenschaften der Folie beim Einsatz als IML oder Thermolabelling-Etikett nicht beeinträchtigt werden. Insbesondere wurde festgestellt, daß eine Deckschicht, welche nur aus dem Co- oder Terpolymer I aufgebaut ist, bei der Herstellung der Folie derartig auf den Walzen verklebt oder Ablagerungen bildet, daß eine Handhabung des Materials im Herstellprozeß der Folie nahezu unmöglich ist.

Überraschenderweise zeigt die erfindungsgemäße Folie bei ihrer Verwendung als Etikett im InMould- und Thermolabellingverfahren hervorragende Hafteigenschaften, nicht nur gegenüber Behältnissen aus PP und PE. Die Folie läßt sich auch als Etikett hervorragend auf Behälter aus PS, PVC, PC und PET aufbringen, ohne daß zusätzlich Kleber, Lacke, Beschichtungen oder sonstige Hilfsstoffe erforderlich sind. Bei der erfindungsgemäßen Verwendung als Etikettenfolie im IML- oder im Thermolabeling-Verfahren wird eine sehr gute Haftung zwischen Etikett und Behältnis gefunden. Damit wird erstmals ein Material zur Verfügung gestellt, welches in einer bisher noch nicht möglichen Breite für verschiedenste Behältermaterialien eingesetzt werden kann. Dies hat auch erhebliche logistische Vorteile.

Auf Grund dieser besonderen Hafteigenschaften kann diese Folie nicht nur zur Etikettierung der Behältnisse aus PP, PE, PS, PVC, PC und PET verwendet werden, sondern auch in einer speziellen Anwendung als Deckelfolie für Behältnissen aus PP, PE, PS, PVC, PC und PET. Als Behältnisse kommen beliebig geformte Behälter in Frage, wie z.B. Becher, Schalen, Abformteile usw. Es wurde gefunden, daß die innere Deckschicht eine sehr gute Haftung auch als Deckel aufweist und die Behälter gut verschließt und dadurch gegen Kontamination zuverlässig schützt. Gleichzeitig läßt sich die Folie rückstandfrei vom Behälter abziehen, wenn das Packgut entnommen werden soll. Bekannte Deckelfolien nach dem Stand der Technik hinterlassen nach dem Abziehen vom Behältnis häufig fetzenartige weiße Häutchen am Rand, bzw. im Siegel- oder Prägebereich des Behälters auf den die Folie aufgeschweißt wurde. Diese Folienreste die dann am Behälterrand hängen stören gegebenenfalls die Entnahme des Packguts, können vom Verbraucher nicht ohne weiteres identifiziert werden und sind daher nicht akzeptabel. Als weiterer Vorteil wurde gefunden, daß die Aufbringung der Deckelfolie bei Temperaturen von < 100°C, vorzugsweise 70 bis < 100°C erfolgen kann und bereits bei diesen Temperaturen die gute Haftung erzielt wird. Dadurch bleiben der Behälterrand und/oder die Zwischenstege formstabil.

Des weiteren wurde gefunden, daß die Folie mit ihrer inneren Deckschicht auch hervorragende Hafteigenschaften gegenüber Oberflächen aus Papier, Holz, Metall, beispielsweise Aluminium oder Weißblech, aufweist. Auf Grund dieser Hafteigenschaften kann die Folie für weitere Anwendungen vorteilhaft eingesetzt werden.

Die Folie kann für Laminierungen und Kaschierung mit anderen flächigen Substraten eingesetzt werden, ohne daß ein Kleber zur Haftung des Etiketts auf das Substrat aufgebracht werden muß. Beispielsweise läßt sich die Folie direkt mit ihrer inneren Oberfläche hervorragend gegen Papier, Aluminium und andere thermoplastische Folien laminieren. Des weiteren zeigt die Folie auf der Oberfläche der inneren Deckschicht eine erhöhte Haftung gegenüber Kaltsiegelklebern, Druckfarben und diversen Beschichtungen, die nach der Herstellung der Folie aufgebracht werden. In einer weiteren Anwendung zeigt die Folie eine verbesserte Haftung bei Metallisierung mittels Vakuumbedampfung.

Für diese guten Hafteigenschaften ist der Aufbau und die Zusammensetzung der inneren Deckschicht der Folie wesentlich. Diese innere Deckschicht ist beim Etikettieren dem Behältnis zugewandt und bildet die Verbindung zwischen Behälter und Etikett. Für entsprechende Anwendungen als Deckelfolie ist beim Aufbringen des Deckels die innere Deckschicht dem Behältnis zugewandt und bildet die Verbindung zwischen Deckelfolie und Behältnis.

Die innere Deckschicht ist im Sinne der vorliegenden Erfindung diejenige Deckschicht, welche beim Etikettieren dem Behältnis zugewandt ist und beim Etikettieren die Verbindung zwischen dem Behälter und dem Etikett bildet. Aufbau und Zusammensetzung der inneren Deckschicht sind wesentlich für die guten und vielfältigen Hafteigenschaften des Etiketts. Es wurde gefunden, daß die Oberfläche der inneren Deckschicht eine erhöhte Oberflächenrauheit aufweist, welche beim Etikettierprozeß das Entstapeln erleichtert und eine blasenfreie Applikation unterstützt. Überraschenderweise werden die guten und vielfältigen Hafteigenschaften durch diese Oberflächenrauheit nicht beeinträchtigt.

Die innere Deckschicht enthält als erfindungswesentliche Bestandteile ein Co- oder Terpolymer I aus einem Olefin und einer ungesättigten Carbonsäuren oder deren Ester oder deren Anhydride und einen Zusatzstoff. Gegebenenfalls enthält die innere Deckschicht zusätzlich Antiblockmittel. Im allgemeinen enthält die innere Deckschicht mindestens 70 Gew.-%, vorzugsweise 80 bis 99,5 Gew.-%, insbesondere 85 bis 99 Gew.-% des Co- oder Terpolymeren I und höchstens 30 Gew.-%, vorzugsweise 0,5 bis 20 Gew.-%, insbesondere 1 bis 15 Gew.-% des Zusatzstoff, jeweils bezogen auf das Gewicht der inneren Deckschicht.

Geeignete Co- oder Terpolymere I sind aus Olefinen und ungesättigten Carbonsäuren oder deren Ester oder deren Anhydride als Monomere aufgebaut. Olefine sind beispielsweise Ethylen, Propylen oder Buten-1, ggf. auch höhere Homologe wie z.B. Hexen oder Octen. Ungesättigte Carbonsäuren umfassen ungesättigte Mono- und Dicarbonsäuren sowie deren Ester oder Anhydride. Als ungesättigte Carbonsäuren sind Acrylsäure oder Methacrylsäure sowie deren Ester bevorzugt. Grundsätzlich kann das Co- oder Terpolymere I aus verschiedenen Olefinen und verschiedenen ungesättigten Carbonsäuren oder deren Ester/Anhydriden, aufgebaut sein. Besonders vorteilhaft sind Copolymere I aus Ethylen und Acrylsäureester oder Methacrylsäureester.

Terpolymere I sind im allgemeinen aus drei verschiedenen Monomeren (a), (b) und (c) aufgebaut. Zu den Monomeren (a) gehören die vorstehend genannten Olefine, die Monomere (b) sind ungesättigte Carbonsäuren oder deren Ester, Monomere (c) sind von (b) verschiedene Carbonsäureester oder Carbonsäureanhydride. Als Monomer (c) sind ungesättigte Monocarbonsäureester, beispielsweise Glycidylmethacrylat, oder ungesättigte Dicarbonsäuren oder deren Anhydrid, wie beispielsweise Maleinsäure oder Maleinsäureanhydrid bevorzugt. Besonders vorteilhaft sind Terpolymere aus (a) Ethylen, (b) Acrylsäure oder Methacrylsäure oder deren Ester und (c) Glycidylmethacrylat oder Maleinsäureanhydrid.

Die Ester der beschriebenen ungesättigten Carbonsäuren leiten sich von einem oder mehreren niederen Alkoholen ab. Geeignet sind beispielsweise Methyl-, Ethyl-, n-Propyl-, i-Propyl-, n-Butyl-, i-Butyl-, sec-Butyl- oder tert.-Butyl-Ester.

Die Zusammensetzung der Co- oder Terpolymeren I aus den jeweiligen Monomeren kann innerhalb der nachstehend beschriebenen Grenzen variieren. Copolymere I enthalten im allgemeinen mindestens 60 Gew.-%, vorzugsweise 70 bis 97 Gew.-% Olefin, vorzugsweise Ethylen und höchstens 40 Gew.-%, vorzugsweise 3 bis 30 Gew.-% ungesättigte Carbonsäuren oder deren Estern, vorzugsweise Acrylsäure oder Methacrylsäure oder deren Ester. Terpolymere I enthalten im allgemeinen
(a) 65 bis 96 Gew.-%, vorzugsweise 72 bis 93 Gew.-% Olefin, vorzugsweise Ethylen und
(b) 3 bis 34 Gew.-%, vorzugsweise 5 bis 26 Gew.-% ungesättigte Carbonsäuren oder deren Estern, vorzugsweise Acrylsäure oder Methacrylsäure oder deren Ester und
(c) 1 bis 10 Gew.-%, vorzugsweise 2 bis 8 Gew.-% von (b) verschiedene ungesättigte Mono- oder Dicarbonsäuren oder deren Ester oder deren Anhydrid, vorzugsweise Maleinsäureanhydrid oder Glycidylmethacrylat.

Die vorstehend beschriebenen Co- oder Terpolymeren I der inneren Deckschicht haben im allgemeinen einen Schmelzpunkt von 40 bis 120°C, vorzugsweise 60 bis 100°C. Der Vicatpunkt (nach DIN 53460) liegt vorzugsweise im Bereich von 30 bis 90°C. Der Schmelzindex beträgt im allgemeinen 0,1 bis 20 g/10min (190°C, 21,6N), vorzugsweise 0,1 bis 15 g/10min.

Als weitere wesentliche Komponente enthält die innere Deckschicht einen Zusatzstoff in einer Menge von 1 bis 30 Gew.-% bezogen auf das Gewicht der inneren Deckschicht, vorzugsweise ein Wachs, vorzugsweise Polyethylenwachse oder Paraffine. Polyethylenwachse sind niedrigmolekulare Polymere, die im wesentlichen aus Ethyleneinheiten aufgebaut und teil- oder hochkristallin sind. Die Polymerketten aus den Ethyleneinheiten sind langgestreckte Moleküle, die verzweigt sein können, wobei kürzere Seitenketten überwiegen. Im allgemeinen werden Polyethylenwachse durch direkte Polymerisation des Ethylens, gegebenenfalls unter Einsatz von Reglern, oder durch Depolymerisation von Polyethylenen mit höheren Molmassen hergestellt. Vorzugsweise haben die Polyethylenwachse ein mittleres Molekulargewicht Mn (Zahlenmittel) von 200 bis 5000, vorzugsweise von 400 bis 2000, besonders bevorzugt 400 bis 1000 und vorzugsweise eine Molekulargewichtsverteilung (Polydispersität) Mw/Mn von unter 3, vorzugsweise 1 bis 2. Der Schmelzpunkt liegt im allgemeinen im Bereich von 70 bis 150°C, vorzugsweise 80 bis 100°C.

Paraffine umfassen makrokristalline Paraffine (Paraffinwachse) und mikrokristalline Paraffine (Mikrowachse). Die makrokristallinen Paraffine werden aus den Vakuumdestillatfraktionen bei der Verarbeitung von Schmierölen gewonnen. Die mikrokristallinen Paraffine stammen aus den Rückständen der Vakuumdestillation und den Sedimenten paraffinischer Rohöle (Ausscheidungsparaffine). Die makrokristallinen Paraffine bestehen überwiegend aus n-Paraffinen, die zusätzlich je nach Raffinationsgrad iso-Paraffine, Naphtene und Alkylaromaten enthalten. Die mikrokristallinen Paraffine bestehen aus einem Gemisch von Kohlenwasserstoffe, die bei Raumtemperatur vorwiegend fest sind. Anders als bei den makrokristallinen Paraffinen sind die iso-Paraffine und naphtenische Paraffine vorherrschend. Die mikrokristallinen Paraffine zeichnen sich durch das Vorhandensein von kristallisationshemmenden, stark verzweigten iso-Paraffinen und Naphtenen aus. Für die Zwecke der Erfindung sind Paraffine mit einem Schmelzpunkt von 60 bis 100°C, vorzugsweise 60 bis 85°C besonders geeignet.

In einer weiteren Ausführungsform kann die innere Deckschicht als Zusatzstoff eine oder mehrere andere Komponente enthalten, welche die Ablagerungen bei der Folienherstellung in gleicher Weise wie das Wachs verhindert oder verhindern. Der Anteil an derartigen Zusatzstoffe liegt im allgemeinen zwischen 2 und 30 Gew.-%, vorzugsweise 3 bis 20 Gew.-%, insbesondere 3 bis 10 Gew.-%, wobei sich der Anteil an Co- oder Terpolymer I in der Zusammensetzung der inneren Deckschicht entsprechend reduziert. Geeignete Zusatzstoffe dieser Art sind Polyolefine, Polystyrol, Polyester, Polyamide, Kohlenwasserstoffharze.

Als Polyolefine sind besonders solche ohne Carbonsäuremonomere geeignet. Besonders bevorzugt sind Polyolefine, welche nachstehend als Co- und Terpolymere II im Zusammenhang mit der äußeren Deckschicht beschrieben sind, insbesondere Propylenpolymere oder Polyethylene. Geeignete Polyethylene sind sowohl lineare als auch verzweigte Polyethylene, beispielsweise MDPE, VLDPE, LLDPE, LDPE oder HDPE.

Als Kohlenwasserstoffharze sind natürliche oder synthetische Harze mit einem Erweichungspunkt von 80-180°C, wie z.B. Kohlenwasserstoffharze, Ketonharze, Kolophonium, Dammarharze, Polyamidharze sowie aliphatische und aromatische Kohlenwasserstoffharze geeignet.

Beim In-Mould- bzw. Thermolabeling ist es für eine blasenfreie Applikation des Etiketts besonders wünschenswert, daß die innere Oberfläche der Etikettenfolie zwecks Erleichterung des Austritts der Luft aus dem Spalt zwischen Etikett und Behälterwand entsprechend strukturiert ist. Es wurde gefunden, daß die Abmischung der Co- und Terpolymeren I mit Polyethylenen als Zusatzstoff zu einer rauhen Oberfläche der inneren Deckschicht beiträgt, welche sich günstig auf die "Entlüftung" beim Etikettieren auswirkt. Derartige PE-haltige Zusammensetzungen der inneren Deckschicht sind daher hinsichtlich der Optik des aufgebrachten Etiketts besonders vorteilhaft.

Gegebenenfalls kann die innere Deckschicht auch Mischungen der vorstehend genannten Zusatzstoffe enthalten, wobei insbesondere Mischungen aus Wachs und Polyethylen bevorzugt sind. Dabei sind Kombinationen von 1-10 Gew.-% Wachs und 1-10 Gew.-% Polyolefin, insbesondere Copolymere II oder Polyethylene (jeweils bezogen auf das Gewicht der Deckschicht) hinsichtlich der Ablagerungen bei der Folienherstellung besonders vorteilhaft, ohne die Hafteigenschaften des Etikettes zu mindern.

Neben üblichen Etikettenanwendungen spielt der Oberflächenschutz von Gebrauchsgegenständen eine wichtige Rolle. Auf kratzempfindliche und leicht zerbrechliche Materialien, wie z.B. Glas, wird zum Transport eine Schutzfolie aufgebracht, die sich später wieder problemlos entfernen läßt. Dazu ist ein gewisses Haftvermögen der Folie gegenüber dem zu schützenden Material erforderlich, damit die Schutzfolie nicht vorzeitig abfällt. Gleichzeitig, darf die Haftung aber auch nicht zu groß sein, daß ein spurenfreies Entfernen ermöglicht wird. Es wurde gefunden, daß für diese Anwendungen Ausführungsformen mit Copolymer als Zusatzstoff, insbesondere Propylencopolymer, wie beispielsweise Propylen-Ethylen-Copolymere mit einem C2 Gehalt von 2 bis 10 Gew.-% besonders vorteilhaft sind, wobei für diesen Zweck der Gehalt an Copolymer bis zu 50 Gew.-%, bezogen auf das Gewicht der Deckschicht, erhöht werden kann.

Die innere Deckschicht kann zusätzlich übliche Additive wie Neutralisationsmittel, Stabilisatoren, Antistatika, Antiblockmittel und/oder Gleitmittel in jeweils wirksamen Mengen enthalten. Die nachstehenden Angaben in Gew.-% beziehen sich jeweils auf das Gewicht der inneren Deckschicht. Insbesondere sind Ausführungsformen bevorzugt, die zusätzlich Antiblockmittel in der inneren Deckschicht enthalten. Es wurde gefunden, daß das Antiblockmittel zur Verringerung der Ablagerungen (pick-off) bei der Herstellung der Folie beiträgt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Siliciumdioxid und Calciumcarbonat sind bevorzugt. Die mittlere Teilchengröße liegt zwischen 1 und 6 µm, insbesondere 2 und 5 µm. Die wirksame Menge an Antiblockmittel liegt im Bereich von 0,1 bis 5 Gew.-%, vorzugsweise 0,5 bis 3 Gew.-%, insbesondere 0,8 bis 2 Gew.-%.

Gleitmittel sind höhere aliphatische Säureamide, höhere aliphatische Säureester und Metallseifen sowie Polydimethylsiloxane. Die wirksame Menge an Gleitmittel liegt im Bereich von 0,01 bis 3 Gew.-%, vorzugsweise 0,02 bis 1 Gew.-% bezogen auf die innere Deckschicht. Besonders geeignet ist der Zusatz von 0,01 bis 0,3 Gew.% aliphatischer Säureamide, wie Erucasäureamid oder 0,02 bis 0,5 Gew.-% von Polydimethylsiloxanen, insbesondere Polydimethylsiloxane mit einer Viskosität von 5 000 bis 1 000 000 mm²/s.

In einer bevorzugten Ausführungsform wird die Oberfläche der inneren Deckschicht Corona-, Plasma- oder Flamm-behandelt. Es wurde gefunden, daß eine derartige Oberflächenbehandlung, insbesondere die Coronabehandlung die Haftfestigkeit der inneren Deckschicht gegenüber den verschiedenen Polymer-Materialien verbessert.

Die Dicke der inneren Deckschicht ist im allgemeinen größer als 0,3 µm und liegt vorzugsweise im Bereich von 0,5 bis 5 µm, insbesondere 1 bis 3 µm.

Erfindungsgemäß weisen Folien, die mit der oben beschriebenen inneren Deckschicht im IML-Verfahren oder nach dem Thermolabelling-Verfahren auf ein Behältnis aufgebracht werden sehr gute Haftfestigkeiten nicht nur gegenüber PP und PE-Behältern auf. Auch die Haftfestigkeiten gegenüber PVC-, PS- und PET-Behältern sind hervorragend. Bei Anwendung im Thermolabeling-Verfahren wird bei Temperaturen der Behälterwandung von 130°C und bei einem Siegeldruck von 10 N/cm² und bei 0,5 sec Anpreßzeit, eine Haftfestigkeit > 0,5 N/15 mm, in der Regel > 1,0 N/15 mm erzielt. Die vorstehend beschriebene innere Deckschicht mit der erfindungsgemäßen Zusammensetzung kann vorteilhaft auf transparenten oder opaken Basisschichten aufgebracht werden. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die Basisschicht der Folie enthält für transparente Ausführungsformen im allgemeinen mindestens 85 Gew.-%, vorzugsweise 90 bis <100 Gew.-%, insbesondere 95 bis 99 Gew.-%, jeweils bezogen auf die Basisschicht, eines Polyolefins. Polyolefine sind beispielsweise Polyethylene, Polypropylene, Polybutylene oder Mischpolymerisate aus Olefinen mit zwei bis acht C-Atomen, worunter Polyethylene und Polypropylene bevorzugt sind.

Im allgemeinen enthält das Propylenpolymer mindestens 90 Gew.-%, vorzugsweise 94 bis 100 Gew.-%, insbesondere 98 bis <100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 140 bis 170°C, vorzugsweise von 150 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels M_{w} zum Zahlenmittel Mₙ liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren der Basisschicht erreicht man beispielsweise durch dessen peroxidischen Abbau oder durch Herstellung des Polypropylens mittels geeigneter Metallocenkatalysatoren.

In einer bevorzugten Ausführungsformen ist die Basisschicht durch Zusatz von Füllstoffen opak. Im allgemeinen enthält die Basisschicht in dieser Ausführungsform mindestens 70 Gew.-%, vorzugsweise 75 bis 99 Gew.-%, insbesondere 80 bis 98 Gew.-%, jeweils bezogen auf das Gewicht der Basisschicht, der vorstehend beschriebenen Polyolefine bzw. Propylenpolymeren, wobei ebenfalls die beschriebenen Propylenhomopolymere bevorzugt sind.

Die opake Basisschicht enthält Füllstoffe in einer Menge von maximal 30 Gew.-%, vorzugsweise 1 bis 25 Gew.-%, insbesondere 2 bis 20 Gew.-%, bezogen auf das Gewicht der Basisschicht. Füllstoffe sind im Sinne der vorliegenden Erfindung Pigmente und/oder vakuoleniniziierende Teilchen.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. "Pigmente" haben im allgemeinen einen mittleren Teilchendurchmesser von 0,01 bis maximal 1 µm, vorzugsweise 0,01 bis 0,7 µm, insbesondere 0,01 bis 0,4 µm. Pigmente umfassen sowohl sogenannte "Weißpigmente", welche die Folien weiß einfärben, als auch "Buntpigmente", welche der Folie eine bunte oder schwarze Farbe verleihen. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm , vorzugsweise 1,5 bis 5 µm. Der chemische Charakter der Teilchen spielt eine untergeordnete Rolle, sofern Unverträglichkeit vorliegt.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbomen oder Tetracyclododecen mit Ethylen oder Propen, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die opake Basisschicht enthält Pigmente in einer Menge von 0,5 bis 10 Gew.-%, vorzugsweise 1 bis 8 Gew.-%, insbesondere 1 bis 5 Gew.-%. Vakuoleniniziierende Füllstoffe sind in einer Menge von 0,5 bis 30 Gew.-%, vorzugsweise 1 bis 15 Gew.-%, insbesondere 1 bis 10 Gew.-% enthalten. Die Angaben beziehen sich auf das Gewicht der Basisschicht.

Die Dichte der Folie kann je nach Zusammensetzung der Basisschicht in einem Bereich von 0,4 bis 1,1 g/cm³ variieren. Dabei tragen Vakuolen zu einer Erniedrigung der Dichte bei, wohingegen Pigmente, wie Z.B. TiO₂ auf Grund seines höheren spezifischen Gewichts die Dichte der Folie erhöht. Vorzugsweise beträgt die Dichte der Folie 0,5 bis 0,95 g/cm³.

Zusätzlich kann die Basisschicht, sowohl in einer transparenten, als auch in einer opaken Ausführungsform übliche Additive wie Neutralisationsmittel, Stabilisatoren, Antistatika und/oder Gleitmittel in jeweils wirksamen Mengen enthalten. Die nachstehenden Angaben in Gew.-% beziehen sich jeweils auf das Gewicht der Basisschicht.

Bevorzugte Antistatika sind Glycerinmonostearate, Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignete aliphatische Säureamide sind Erucasäureamid und Stearylamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische und phosphitische Stabilisatoren wie Tris 2,6-dimethylphenylphosphit. Phenolische Stabilisatoren mit einer Molmasse von mehr als 500 g/mol werden bevorzugt, insbesondere Tris-2,6-dimethylphenylphosphit, Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4 Gew.-%, insbesondere 0,1 bis 0,25 Gew.-% eingesetzt.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g. Im allgemeinen werde 0,02 bis 0,1 Gew.-% zugesetzt.

Für zweischichtige Ausführungsformen, welche nur eine innere Deckschicht aufweisen, ist es bevorzugt, daß die äußere Oberfläche der Basisschicht mittels Corona-, Plasma oder Flamme oberflächenbehandelt wird.

Die erfindungsgemäße Polyolefinfolie weist vorzugsweise eine zweite, äußere Deckschicht auf, welche eine gute Haftung gegenüber üblichen Druckfarben, Klebern, sowie Beschichtungen und/oder Lacken zeigt. Diese äußere Deckschicht der Folie ist vorzugsweise auf der gegenüberliegenden Oberfläche der Basisschicht aufgebracht und wird nachstehend "äußere Deckschicht" genannt. Zur weiteren Verbesserung der Haftung von Druckfarben, Klebern und Beschichtungen ist es bevorzugt eine Corona-, Plasma- oder Flammbehandlung der Oberfläche der äußeren Deckschicht durchzuführen.

Die äußere Deckschicht ist im allgemeinen aus Polymeren aus Olefinen mit 2 bis 10 Kohlenstoffatomen aufgebaut. Die äußere Deckschicht enthält im allgemeinen 95 bis 100 Gew.-% Polyolefin, vorzugsweise 98 bis <100Gew.-% Polyolefin, jeweils bezogen auf das Gewicht der Deckschicht/en.

Beispiele für geeignete olefinische Polymere der Deckschicht/en sind Propylenhomopolymere, Co- oder Terpolymere II aus Ethylen- Propylen und/oder Butyleneinheiten oder Mischungen aus den genannten Polymeren. Diese Co- oder Terpolymere II enthalten keine Carbonsäuremonomeren (bzw. Ester davon). Es sind Polyolefine. Hierunter sind bevorzugte Polymerisate statistische Ethylen-Propylen-Copolymere mit einem Ethylengehalt von 1 bis 10 Gew.-%, bevorzugt 2,5 bis 8 Gew.-%, oder statistische Propylen-Butylen-1-Copolymere mit einem Butylengehalt von 2 bis 25 Gew.-%, bevorzugt 4 bis 20 Gew.-%, oder statistische Ethylen-Propylen-Butylen-1-Terpolymere mit einem Ethylengehalt von 1 bis 10 Gew.-% und einem Butylen-1-Gehalt von 2 bis 20 Gew.-%, oder eine Mischung oder ein Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%. Die Angaben in Gew.-% beziehen sich jeweils auf das Gewicht des Polymeren.

Die in der äußeren Deckschicht eingesetzten vorstehend beschriebenen Co- und/oder Terpolymeren II weisen im allgemeinen einen Schmelzflußindex von 1,5 bis 30g/10min, vorzugsweise von 3 bis 15 g/10 min, auf. Der Schmelzpunkt liegt im Bereich von 120 bis 145 °C. Das vorstehend beschriebene Blend aus Co- und Terpolymeren II hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Gegebenenfalls können alle vorstehend beschriebenen Deckschichtpolymeren peroxidisch oder auch thermooxidativ abgebaut sein, wobei der Abbaufaktor im allgemeinen in einem Bereich von 1 bis 15, vorzugsweise 1 bis 8 liegt.

Gegebenenfalls können der äußeren Deckschicht/en die vorstehend beschriebenen Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der Deckschicht.

Geeignete Antiblockmittel sind bereits im Zusammenhang mit der inneren Deckschicht beschrieben. Diese Antiblockmittel sind auch für die äußere Deckschicht geeignet. Die bevorzugte Menge an Antiblockmittel liegt für die äußere Deckschicht im Bereich von 0,1 bis 2 Gew.-%, vorzugsweise 0,1 bis 0,8 Gew.-%.

Die Dicke der äußeren Deckschicht ist im allgemeinen größer als 0,1 µm und liegt vorzugsweise im Bereich von 0,1 bis 5 µm, insbesondere 0,3 bis 2 µm.

In einer besonders bevorzugten Ausführungsform wird die Oberfläche der äußeren Deckschicht Corona-, Plasma- oder Flamm-behandelt. Diese Behandlung dient dazu, die Folienoberfläche für eine anschließende Dekoration und Bedruckung vorzubereiten, d.h. die Benetzbarkeit mit und Haftung von Druckfarben und sonstigen Dekorationsmitteln zu gewährleisten.

Die erfindungsgemäße Folie umfaßt mindestens die vorstehend beschriebene Basisschicht und die innere Deckschicht, aus Co- oder Terpolymer I und Zusatzstoff. Gegebenenfalls ist auf der gegenüberliegenden Oberfläche eine zweite, äußere Deckschicht aufgebracht. Gegebenenfalls kann/können auch einseitig eine oder beidseitig Zwischenschicht/en zwischen der Basis- und der/den Deckschicht/en vorhanden sein.

Die Zwischenschicht/en kann/können aus den für die Basisschicht bzw. für die Deckschichten beschriebenen olefinischen Polymeren, vorzugsweise Propylen-polymeren aufgebaut sein. Die Zwischenschicht/en kann/können die für die einzelnen Schichten beschriebenen üblichen Additive wie Antistatika, Neutralisationsmittel, Gleitmittel und/oder Stabilisatoren enthalten. In einer weiteren Ausführungsform kann derjenigen Zwischenschicht, welche zwischen der Basisschicht und der inneren Deckschicht angeordnet ist, ebenfalls ein Zusatzstoff wie vorstehend für die innere Deckschicht beschrieben zugefügt werden. Als Zusatzstoffe sind ebenfalls die beschriebenen Polyolefine, Polystryrol, Polyester, Polyamide, Kohlenwasserstoff und Wachs bevorzugt. Der Gehalt an Zusatzstoff in der Zwischenschicht beträgt maximal 30 Gew.% und liegt vorzugsweise im Bereich von 0,5 bis 20 Gew.-%, jeweils bezogen auf das Gewicht der Zwischenschicht. Die Dicke dieser Zwischenschicht ist größer als 0,5 µm und liegt vorzugsweise im Bereich von 0,6 bis 6 µm, insbesondere 1 bis 4 µm.

Unter den möglichen geeigneten Additiven sind höhere aliphatische Säureamide höhere aliphatische Säureester, wie z.B. Erucasäureamid und/oder Polysiloxan, wie Polydimethylsiloxane besonders geeigne, wobei diese Additive in üblichen oder auch leicht erhöhten Mengen eingesetzt werden. Beispielsweise können bis zu 5 Gew.-% ESA oder PDMS in die Zwischenschicht eingearbeitet werden.

Gegebenenfalls kann die Zwischenschicht zusätzlich die für die Deckschichten beschriebenen Antiblockmittel enthalten, um zusätzlich zur Oberflächenrauheit beizutragen.

Die Zwischenschicht, die in einer bevorzugten Ausführungsform zwischen der äußeren Deckschicht und der Basisschicht aufgebracht sein kann (nachstehend äußere Zwischenschicht), trägt zu einem hohen Glanz auf der Außenseite des opaken Etiketts bei, insbesondere ungefüllte (d.h. ohne vakuoleninitierende Füllstoffe und ohne TiCl₂) äußere Zwischenschichten aus Propylenhomopolymer. Für Ausführungsformen bei denen ein weißes oder opakes Erscheinungsbild (hohe Deckkraft) des Etiketts gewünscht ist enthält die äußere Zwischenschicht vakuoleniniziierenden Füllstoffen und/oder Pigmente, insbesondere TiO₂. Die Dicke dieser äußeren Zwischenschicht ist größer als 0,3 µm und liegt vorzugsweise im Bereich von 1,0 bis 15 µm, insbesondere 1,5 bis 10 µm.

Die Gesamtdicke der erfindungsgemäßen Etikettenfolie kann innerhalb weiter Grenzen variieren und richtet sich nach dem beabsichtigten Einsatz. Sie beträgt vorzugsweise 15 bis 150 µm, insbesondere 20 bis 100 µm, vorzugsweise 25 bis 90 µm. Dabei macht die Basisschicht etwa 40 bis 99 % der Gesamtfoliendicke aus.

Die Erfindung betrifft weiterhin ein Verfahren zur Herstellung der erfindungsgemäßen Polyolefinfolie nach dem an sich bekannten Coextrusionsverfahren. Im Rahmen dieses Verfahrens werden die den einzelnen Schichten der Folie entsprechenden Schmelzen gleichzeitig und gemeinsam durch eine Flachdüse coextrudiert, die so erhaltene Folie zur Verfestigung auf einer oder mehreren Walze/n abgezogen, die mehrschichtige Folie anschließend gestreckt (orientiert), die gestreckte Folie thermofixiert und gegebenenfalls an der zur Behandlung vorgesehenen Oberflächenschicht plasma- corona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 10 bis 50°C, abgezogen, wobei sie abkühlt und sich verfestigt

Die so erhaltene Folie wird dann längs und quer zur Extrusionsrichtung gestreckt, was zu einer Orientierung der Molekülketten führt. Das Längsstrecken wird man vorzugsweise bei einer Temperatur von 70 bis 130 °C, vorzugsweise 80 bis 110°C, zweckmäßigerweise mit Hilfe zweier entsprechend dem angestrebten Streckverhältnis verschieden schnellaufender Walzen durchführen und das Querstrecken vorzugsweise bei einer Temperatur von 120 bis 180 °C mit Hilfe eines entsprechenden Kluppenrahmens. Die Längsstreckverhältnisse liegen im Bereich von 3 bis 8 vorzugsweise 4 bis 6. Die Querstreckverhältnisse liegen im Bereich von 5 bis 10, vorzugsweise 7 bis 9.

Grundsätzlich ist es für die Längsstreckung einer Folie mittels Walzen erforderlich die Folie durch den Walzenkontakt auf eine Mindesttemperatur zu erwärmen, damit eine gleichmäßige Verstreckung möglich ist. Im Zusammenhang mit der vorliegenden Erfindung wurde gefunden, daß die Deckschicht aus Co- oder Terpolymeren I verstärkt dazu neigen auf den Walzen des Längsstreckwerks zu verkleben. Es zeigte sich, daß eine Folie deren Deckschicht nur aus Co- oder Terpolymere I besteht im üblichen Stenterprozeß nicht mittels Walzen in Längsrichtung verstreckt werden kann. Sind die Temperaturen zu hoch führen Ablagerungen auf den Längsstreckwalzen zu optischen Defekten. Bei niedrigeren Temperaturen kommt es zu Streckbögen und Abrissen. Es konnte kein geeigneter Temperaturbereich gefunden werden, in dem die Folie im Produktionsmaßstab herstellbar ist.

Überraschenderweise werden durch die beschriebenen Zusatzstoffe in der Deckschicht die Klebeneigung des Deckschichtrohstoffs und die Ablagerungen auf den Längsstreckwalzen deutlich verringert. So konnte ein Temperaturbereich gefunden werden der die Herstellung der Folie im Produktionsmaßstab erlaubt. Es wurde gefunden, daß durch den Zusatz der Wachse, Polyethylene oder anderer Zusatzstoffe eine Längsstreckung bei einer Temperatur im Bereich des Schmelzpunktes des jeweiligen Deckschichtrohstoffs möglich ist. Bevorzugt wird eine Temperatur im Bereich von 10°C, vorzugsweise 5°C, ober- oder unterhalb des Schmelzpunktes des Co- oder Terpolymeren I gewählt.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im Wesentlichen unpolaren Polymermatrix entstehen.

Die Oberflächenbehandlung wie z.B. Corona-Behandlung kann sowohl sofort bei der Herstellung der Etikettenfolie wie auch zu einem späteren Zeitpunkt, z.B. unmittelbar vor dem Etikettiervorgang, erfolgen.

Erfindungsgemäß wird die Etikettenfolie in verschiedenen Verfahren für die Etikettierung von Behältern aus Kunststoffen eingesetzt, insbesondere für das In-Mould und Thermolabelling Verfahren, wobei keine Kleber- oder Haftvermittler, Beschichtungen oder ähnliche Hilfsmittel nach der Folienherstellung in einem separaten Arbeitsschritt aufgebracht werden müssen.

Des weiteren wurde gefunden, daß die Etiketten auch auf anderen Materialien wie beispielsweise Glas, Aluminium, Holz oder Weißblech sehr gut haften, wobei bei diesen Materialien die Etikettierung mittels Thermolabelling geeignet ist.

Die zu etikettierenden Behälter aus thermopolastischem Polymer können nach den verschiedensten Verfahren und aus den verschiedensten Materialien hergestellt sein oder hergestellt werden. Dabei können die Behälter sowohl massiv-wandig wie auch geschäumt-wandig sein. Letztere können aus granulatförmigen Vorprodukten, die entsprechende Treibmittel enthalten, in der Form geschäumt werden oder aus geschäumten Platten durch Tiefziehen ausgeformt werden. Je nach den Anforderungen an den Behälter und dem Verfahren zu seiner Herstellung kommen so unterschiedliche Materialien wie Polypropylen (PP), Polyethylen hoher bzw. niedriger Dichte (HD-PE bzw. LD-PE oder LLD-PE), Polystyrol (PS), Polyvinylchlorid (PVC), Polyethylenterephthalat (PET), deren Copolymere und andere Polymere, in Einzelfällen auch Mischungen solcher Polymerer zur Herstellung der Behälter zum Einsatz. Verfahren zur Herstellung der Behälter sind beispielsweise Spritzguß, Dünnwandspritzguß, Blasformen, Tiefziehen, Thermoformen oder Spritzstreckblasen.

Die Etikettierung der Behälter aus thermoplastischem Polymer mit der erfindungsgemäßen Etikettenfolie kann nach dem IML-Verfahren erfolgen und dabei mit allen genannten gängigen Verfahren zur Herstellung von Behältern kombiniert werden. Allen Varianten oder Kombinationen ist dabei gemeinsam, daß das Etikett vor der Formung oder Herstellung des Behälters zugeschnitten (Cut-in-place oder Cut&Stack) und derart in die Form eingelegt wird, daß die bedruckten Außenseite des Etiketts mit der Form in Kontakt steht und später die Sichtseite des Behälters bildet. Die Innenseite des Etiketts ist dem Behälter zugewendet. Bei der Formung oder Herstellung des Behälters verbindet sich die innere Oberfläche des Etikett unter Einwirkung von Druck und Temperatur mit dem Behälter.

Die bei der Formgebung oder Herstellung des Behälters aus thermoplastischem Polymer anzuwendenden Temperaturen und Drücke richten sich nach den Eigenschaften der eingesetzten Formmassen und nach den Erfordernissen des gewählten Verfahrens zur Herstellung oder Formung des Behälters. Diese Bedingungen sind in den Grundzügen in verschiedenen Handbüchern der Kunststoffverarbeitung (u.a. "Kunststoff-Taschenbuch", herausgegeben von Hj. Saechtling, Hanser-Verlag München-Wien) sowie in den Empfehlungen der Hersteller der entsprechenden Formmassen beschrieben.

Die Etikettenfolie kann auch erfindungsgemäß zur Etikettierung von Behältern nach dem Thermolabelling- Verfahren eingesetzt werden. Thermolabelling ist im Sinne der vorliegenden Erfindung ein Etikettierverfahren, bei welchem das Etikett unter Einwirkung von Wärme (ohne zusätzliche Hilfsstoffe) auf ein vorher, d.h. in einem separaten Arbeitsschritt, hergestellten Behältnis aufgebracht wird. Eine überraschende Vielzahl von Behältermaterialien können etikettiert werden, beispielsweise Glas, Metall wie z.B. Weißblech oder Aluminium oder auch thermoplastische Polymere, die vorstehend für das In-Mould label Verfahren beschrieben wurden.

Erfindungsgemäß ist es nicht erforderlich, das Etikett auf der Innenseite zusätzlich mit Haft- und Hilfsstoffen, Klebern oder Beschichtungen zu versehen. Es genügt die Einwirkung von Wärme und gegebenenfalls zusätzlich Druck, um das Etikett mit seiner inneren Deckschicht auf die Oberfläche der Behälterwand zu applizieren. Dabei kann entweder das Etikett und/oder der bereits ausgeformte Behälter in einem separaten Verfahrensschritt, nach Behälterherstellung, aber vor der Applikation des Etiketts auf einen geeigneten Temperaturbereich erhitzt werden, wobei der Behälter bei diesen Temperaturen möglichst formstabil bleiben sollte. Der geeignete Temperaturbereich richtet sich nach dem Material des Behälters und beträgt beispielsweise für PP 90 bis 140 °C, für PE-HD 70 bis 120 °C, für PE-LD und - LLD 60 bis 115°C, für PET 130 bis 170 °C, für PC 110 bis 145 °C, für Hart-PVC 70 bis 130 °C, für Weich-PVC je nach Einstellung 50 bis 120 °C und für PS 70 bis 95 °C ermittelt. Bevorzugt wird bei der Etikettierung mit der erfindungsgemäßen Etikettenfolie für PP ein Temperaturbereich von 95 bis 130 °C eingehalten, für PE-HD von 75 bis 115 °C, für PE-LD und -LLD von 65 bis 105°C, für PET von 135 bis 165 °C, für PC von 120 bis 140 °C, für Hart-PVC von 80 bis 125 °C, für Weich-PVC je nach Einstellung von 60 bis 120 °C und für PS von 75 bis 90 °C.

Hilfreich kann die zusätzliche Anwendung eines geeigneten Anpreßdrucks zusammen mit der Einwirkung von Wärme sein. Dabei kann der Druck vollflächig auf das Etikett einwirken, in dem beispielsweise entsprechende "Siegelwerkzeuge" oder Stempel das Etikett flach auf den Behälter aufdrücken. Dies setzt eine flache Behälterform im Bereich des aufzubringenden Etiketts voraus. Gegebenenfalls können Walzen oder Bürsten über das Etikett geführten werden und so das Etikett über seine gesamte Fläche andrücken. Dies ist insbesondere bei runden Behälterformen vorteilhaft. Der Anpreßdruck kann innerhalb weiter Grenzen variieren und ist von dem Verfahren und der Behältnisform abhängig.

Insbesondere bei Behältern mit dünnen und flachen Wänden werden solche Verfahrensvarianten bevorzugt, bei denen die Behälterwandung durch einen entsprechenden Gegendruck stabilisiert wird. Bei Bechern und Schalen kommen hierfür an der Innenwand anliegende Matritzen oder Gegenwalzen, sowie besonders bei Flaschen, auch Luft-Überdruck in Betracht.

Gegebenenfalls kann das Etikett auch nur auf einer Teilfläche mit der Behälterwandung (Patch labeling) verbunden werden. Bei dieser Variante wird nach dem Stand der Technik ein Kleber vollflächig auf das Etikett appliziert, das anschließend auf die Behälterwandung aufgebracht wird. Bei der erfindungsgemäßen Etikettenfolie entfällt der Kleberauftrag. Auf ein Behältnis können so ein oder mehrere Etiketten aufgebracht werden.

Eine weitere Variante der nächträglichen Behälteretikettierung ist die Rundumetikettierung, bei welcher das Etikett in Form eines Streifens um den Behälter herumgewickelt und lediglich an den Enden des Streifens mit der Behälterwandung bzw. mit dem Etikett selbst durch Applikation eines Schmelzeklebers, der für die Haftung des Etikettes zum Behältnis bzw. des Etikettes gegen sich selbst sorgt, verbunden wird. Bei der erfindungsgemäßen Folie entfällt der Kleberauftrag. Es genügt die Erwärmung im Bereich des Streifens, welcher gegen den Behälter bzw. gegen die Folie haftet.

Je nach der gewählten Verfahrensvariante kann es vorteilhaft sein, auch oder nur die Etikettenfolie vor der Applikation zu erhitzen. In diesen Fällen liegt der bevorzugte Temperaturbereich der inneren Folienoberfläche bei 70 bis 130°C, besonders bevorzugt bei 80 bis 125 °C. Überraschenderweise sind nur sehr niedrige Temperaturen erforderlich um mittels Thermolabelling eine gute Haftung des Etiketts zu erzeugen.

Je nach dem verwendeten Druckverfahren, dem Verfahren zur Herstellung der Behälter und der maschinellen Ausstattung am Ort der Etikettenapplikation können die Etiketten nach dem "Cut-in-Place"-Verfahren oder nach dem "Cut & Stack"-Verfahren zugeführt werden.

In einer weiteren Anwendung kann die Etikettenfolie auch als Bestandteil eines Laminats eingesetzt werden, welches seinerseits in der beschriebenen Weise als In-Mould oder Thermolabelling-Etikett verwendet werden kann. Die erfindungsgemäßen Etikettenfolien bildet dann die Innenseite des Laminates, so daß erfindungsgemäß die innere Oberfläche der Etikettenfolie in gleicher Weise dem Behältnis zugewandt ist und die gute Haftung auf dem Behälter sicherstellt. Typischerweise kommen auf der Außenseite des Etiketts mehr oder weniger dünne, transparente Folien, insbesondere transparente BOPP-Folien zum Einsatz. Dabei befindet sich das Druckbild zwischen der inneren und der äußeren Folie. Die beiden Folien werden dabei mit einem geeigneten Kleber miteinander verklebt.

### Meßmethoden

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Rauheitsmessung

Als Maß für die Rauheit der Innenseiten der Folien wurden die Rauheitswerte Rz der Folien wurden in Anlehnung an DIN 4768 Teil 1 und DIN 4777 sowie DIN 4772 und 4774 mittels eines Perthometer Typ S8P der Firma Feinprüf Perthen GmbH, Göttingen, nach dem Tastschnitt-Verfahren gemessen. Der Meßkopf, ein Einkufentastsystem gemäß DIN 4772, war mit einer Tastspitze mit dem Radius 5 µm und einem Flankenwinkel von 90 ° bei einer Auflagekraft von 0,8 bis 1,12 mN sowie einer Gleitkufe mit Radius 25 mm in Gleitrichtung ausgestattet. Der vertikale Meßbereich wurde auf 62,5 µm, die Taststrecke auf 5,6 mm und der Cut-off des RC-Filters gemäß DIN 4768/1 auf 0,25 mm eingestellt.

Herstellung der Folien

### Beispiel 1

Es wurde durch Coextrusion und anschließende stufenweise Orientierung in Längs- und Querrichtung wurde eine transparente dreischichtige Folie bestehend aus der Basisschicht B, einer inneren Deckschicht A und einer äußeren Deckschicht C mit einer Gesamtdicke von 60 µm hergestellt. Die Deckschicht A hatte eine Dicke von 2,0 µm und die Deckschicht C eine Dicke von 0,7 µm. Die Schichten waren wie folgt zusammengesetzt:

### Basisschicht B:

- 99,64 Gew.-%: Propylenhomopolymer mit einem Schmelzpunkt von 165 °C und einem Schmelzflußindex von 3,4g/10min und einem Kettenisotaxie-Index von 94 %
- 0,10 Gew.-%: Erucasäureamid (Gleitmittel)
- 0,10 Gew.-%: Armostat 300 (Antistatikum)
- 0,03 Gew.-%: Neutralisationsmittel (CaCO3)
- 0,13 Gew.-%: Stabilisator (Irganox)

### Deckschicht A:

- 94,5 Gew.-%: Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [bei 190°C, 21,6N].
- 0,5 Gew.-%: SiO2 als Antiblockmittel mit einer mittleren Teilchengröße von 4 µm
- 5,0 Gew.-%: Polyethylen-Wachs mit einem Molekulargewicht Mn (Zahlenmittel) von 2000

### Deckschicht C:

- 99,54 Gew.-%: statistisches Copolymer aus Ethylen und Propylen mit einem Schmelzflußindex von 6,0g/10min und einem Ethylengehalt von 6 Gew.-% bezogen auf das Copolymer
- 0,22 Gew.-%: SiO2 als Antiblockmittel mit einer mittleren Teilchengröße von 4 µm
- 0,20 Gew.-%: Stabilisator (Irganox 1010 / Irgafos 168)
- 0,04 Gew.-%: Neutralisationsmittel (CaStearat)

### Die Herstellungsbedingungen in den einzelnen Verfahrensschritten waren:

| | | | |
|---|---|---|---|
| Extrusion: | Temperaturen | Basisschicht B: | 260 °C |
| | | Deckschicht A: | 230 °C |
| | | Deckschicht C: | 240°C |
| | Temperatur der Abzugswalze: | | 20 °C |
| Längsstreckung: | Temperatur: | | 100 °C |
| | Längsstreckverhältnis: | | 1 : 4,5 |
| Querstreckung: | Temperatur: | | 165°C |
| | Querstreckverhältnis: | | 1 : 9 |
| Fixierung: | Temperatur: | | 140°C |
| | Konvergenz: | | 10 % |
| Druckvorbehandlung | Deckschicht A | Corona 10000V / 10000Hz | |
| | Deckschicht C | Corona 10000V / 10000Hz | |

Bei dem Querstreckverhältnis von 1:9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

### Beispiel 2

Es wurde eine dreischichtige Folie, wie in Beispiel 1 beschrieben, hergestellt. Im Unterschied zu Beispiel 1 wurde in die Basisschicht zusätzlich 5,1 Gew.-% Calciumcarbonat (Kreide) mit einem mittleren Teilchendurchmesser von 2µm als vakuoleninitierende Teilchen (Kreide) eingearbeitet. Der Polypropylengehalt wurde entsprechend reduziert. Die Herstellungsbedingungen in den einzelnen Verfahrensschritten waren wie in Beispiel 1. Die Folie war opak. Zusätzlich wurde die Zusammensetzung der Deckschicht A wie folgt geändert:

### Deckschicht A:

- 92,5 Gew.-%: Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [bei 190°C, 21,6N].
- 0,5 Gew.-%: SiO2 als Antiblockmittel mit einer mittleren Teilchengröße von 4 µm
- 2,0 Gew.-%: Polyethylen-Wachs mit einem Molekulargewicht Mn (Zahlenmittel) von 2000
- 5,0 Gew.-%: HDPE mit einem MFI von 15g/10min (190°C / 2,16kg) und einem Schmelzpunkt von 133°C (DSC@10°C/min)

Die Folie wurde zusätzlich zu den nachstehend beschriebenen Etikettieranwendungen als Deckelfolie verwendet und auf Joghurtbecher aus Polystyrol, sowie auf ein Abformteil aus Polypropylen aufgebracht. Die Folie zeigte auf beiden Behältern eine gute Haftung und ließ sich anschließend problemlos und rückstandfrei entfernen. Die gute Haftung konnte bereits bei Temperaturen von ca. 80°C erreicht werden. Dadurch blieb der Siegelrand des Jogurtbechers zuverlässig formstabil.

### Beispiel 3

Es wurde eine dreischichtige Folie, wie in Beispiel 2 beschrieben, hergestellt. Im Unterschied zu Beispiel 2 wurde in die Basisschicht zusätzlich 2,8 Gew.-% Titandioxid (Rutil) als Pigment eingearbeitet. Der Polypropylengehalt wurde entsprechend reduziert. Die Herstellungsbedingungen in den einzelnen Verfahrensschritten waren wie in Beispiel 2. Die Folie war weiß-opak. Zusätzlich wurde die Zusammensetzung der Deckschicht A wie folgt geändert:

### Deckschicht A:

- 89,5 Gew.-%: Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [bei 190°C, 21,6N].
- 0,5 Gew.-%: Si02 als Antiblockmittel mit einer mittleren Teilchengröße von 4 µm
- 10,0 Gew.-%: HDPE mit einem MFI von 15g/10min (190°C / 2,16kg) und einem Schmelzpunkt von 133°C (DSC@10°C/min)

### Beispiel 4

Es wurde eine Folie wie in Beispiel 3 beschrieben, jedoch mit einer zusätzlichen Zwischenschicht, hergestellt. Die Zwischenschicht D wurde zwischen der Basisschicht B und der Deckschicht C angebracht und war aus reinem Propylenhomopolymer mit einem Schmelzpunkt von 165 °C und einem Schmelzflußindex von 3,4g/10min und einem Kettenisotaxie-Index von 94 % aufgebaut. Die Herstellungsbedingungen in den einzelnen Verfahrensschritten waren wie in Beispiel 3. Zusätzlich wurde die Zusammensetzung der Deckschicht A wie folgt geändert:

### Deckschicht A:

- 89,5 Gew.-%: Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [bei 190°C, 21,6N].
- 0,5 Gew.-%: SiO2 als Antiblockmittel mit einer mittleren Teilchengröße von 4 µm
- 10,0 Gew.-%: statistisches Copolymer aus Ethylen und Propylen mit einem Schmelzflußindex von 6,0g/10min und einem Ethylengehalt von 6 Gew.-% bezogen auf das Copolymer

### Beispiel 5

Es wurde eine Folie wie in Beispiel 4 beschrieben, jedoch mit einer zweiten Zwischenschicht E auf der gegenüberliegenden Seite, hergestellt.. Zusätzlich wurde die Zusammensetzung der Deckschicht A wie folgt geändert:

### Deckschicht A:

- 87,5 Gew.-%: Terpolymer aus Ethylen, Ethylacrylester und Maleinsäureanhydrid mit einem Ethylengehalt von 91 Gew.-% Ethylacrylestergehalt von 5 Gew.-% und einem Maleinsäureanhydridgehalt von 4 Gew.-% bezogen auf das Terpolymer. Der Schmelzflußindex betrug 5,0 g/10min [bei 190°C, 21,6N].
- 0,5 Gew.-%: SiO2 als Antiblockmittel mit einer mittleren Teilchengröße von 4 µm
- 2,0 Gew.-%: Polyethylen-Wachs mit einem Molekulargewicht Mn (Zahlenmittel) von 2000
- 10,0 Gew.-%: statistisches Copolymer aus Ethylen und Propylen mit einem Schmelzflußindex von 6,0g/10min und einem Ethylengehalt von 6 Gew.-% bezogen auf das Copolymer

Die Zwischenschichten D und E besaßen folgende Zusammensetzungen:

### Erste Zwischenschicht D:

- 90,58 Gew.-%: Propylenhomopolymer mit einem Schmelzpunkt von 165 °C und einem Schmelzflußindex von 3,4g/10min und einem Kettenisotaxie-Index von 94 %
- 9,0 Gew.%: Titandioxid (Rutil) als Pigment
- 0,12 Gew.-%: Erucasäureamid
- 0,14 Gew.-%: Armostat 300
- 0,03 Gew.-%: Neutralisationsmittel (CaCO3)
- 0,13 Gew.-%: Stabiliator (Irganox)

### Zweite Zwischenschicht E:

- 97,58 Gew.-%: statistisches Copolymer aus Ethylen und Propylen mit einem Schmelzflußindex von 6,0g/10min und einem Ethylengehalt von 6 Gew.-% bezogen auf das Copolymer
- 2,0 Gew. %: Polydimethylsiloxan (PDMS) mit einer Viskosität von 30 000 mm²/s
- 0,18 Gew.%: Erucasäureamid
- 0,20 Gew.-%: Stabilisator (Irganox 1010 / Irgafos 168)
- 0,04 Gew.-%: Neutralisationsmittel (CaStearat)

Die Herstellungsbedingungen in den einzelnen Verfahrensschritten waren wie in Beispiel 2.

### Vergleichsbeispiel 1

Es wurde eine transparente dreischichtige Folie, wie in Beispiel 1 beschrieben hergestellt. Im Unterschied zu Beispiel 1 wurde in der inneren Deckschicht A das Terpolymer aus Ethylen, Ethylacrylester und Maleinsäureanhydrid durch ein statistisches Copolymer aus Ethylen und Propylen mit einem Schmelzflußindex von 6,0g/10min und einem Ethylengehalt von 6 Gew.-% bezogen auf das Copolymer ersetzt. Die Herstellungsbedingungen in den einzelnen Verfahrensschritten waren wie in Beispiel 1.

### Vergleichsbeispiel 2

Es wurde eine dreischichtige opake Folie, wie in Beispiel 2 beschrieben hergestellt. Im Unterschied zu Beispiel 2 wurde in der inneren Deckschicht A das Terpolymer aus Ethylen, Ethylacrylester und Maleinsäureanhydrid durch ein statistisches Copolymer aus Ethylen und Propylen mit einem Schmelzflußindex von 6,0g/10min und einem Ethylengehalt von 6 Gew.-% bezogen auf das Copolymer ersetzt. Die Herstellungsbedingungen in den einzelnen Verfahrensschritten waren wie in Beispiel 2.

### Vergleichsbeispiel 3

Es wurde eine dreischichtige weiß-opake Folie, wie in Beispiel 3 beschrieben hergestellt. Im Unterschied zu Beispiel 3 wurde der HDPE-Gehalt der inneren Deckschicht A auf 50 Gew.% erhöht. Die Herstellungsbedingungen in den einzelnen Verfahrensschritten waren wie in Beispiel 3.

### Vergleichsbeispiel 4

Es wurde eine vierschichtige weiß-opake Folie, wie in Beispiel 4 beschrieben hergestellt. Im Unterschied zu Beispiel 3 wurde der Copolymergehalt der inneren Deckschicht A auf 50 Gew.% erhöht. Die Herstellungsbedingungen in den einzelnen Verfahrensschritten waren wie in Beispiel 4.

### Vergleichsbeispiel 5

Es wurde eine fünfschichtige weiß-opake Folie, wie in Beispiel 5 beschrieben hergestellt. Im Unterschied zu Beispiel 3 wurde der Copolymergehalt der inneren Deckschicht A auf 25 Gew.% erhöht. Die Herstellungsbedingungen in den einzelnen Verfahrensschritten waren wie in Beispiel 5.

### Vergleichsbeispiel 6

Es wurde versucht, eine dreischichtige weiß-opake Folie, wie in Beispiel 1 beschrieben, herzustellen. Im Unterschied zu Beispiel 1 wurde auf Zusatz von Polyethylenwachs und Sylobloc verzichtet. Die Herstellungsbedingungen in den einzelnen Verfahrensschritten waren wie in Beispiel 1. Auf Grund von massiven Ablagerungen auf den Walzen der Längsstreckung konnte keine Folie hergestellt werden.

Die Folien nach den Beispielen und Vergleichsbeispielen wurden in In-Mould und Thermolabelling Verfahren eingesetzt und hinsichtlich ihrer Hafteigenschaften verglichen. Für die In-Mould Testreihe wurden verschiedene Behältermaterialien bei den jeweiligen für das Polymere üblichen Verarbeitungstemperaturen in eine Behälterform gespritzt. Vor dem eigentlich Spritzvorgang wurde eine Folie gemäß den Beispielen und den Vergleichsbeispielen derart in die Behälterform eingelegt, daß die Innenseite der Folie dem zu formenden Behältnis zugewandt war. Nach der Herstellung des etikettierten Behälters wurde die Haftfestigkeit des jeweiligen Etiketts geprüft. Die Ergebnisse sind in der Tabelle 1 zusammengefaßt.

Für die Thermolabelling Testreihe wurden Behältnisse aus verschiedenen Polymeren eingesetzt. In Einzelfällen, wie z.B. beim Glasbehälter wurde da Behältnis leicht vorgewärmt (ca. 50-60°C). Ein entsprechender Folienzuschnitt wurde auf den jeweiligen Behälter unter Einwirkung eines manuellen Anpreßdrucks bei einer Temperatur von 120 bis 130°C mittels eines Handsiegelkolbens aufgebügelt. Nach Abkühlung des auf diese Weise etikettierten Behälters auf Raumtemperatur wurden die Haftfestigkeiten untersucht. Die Ergebnisse sind in Tabelle 2 zusammengefaßt.

**Tabelle 1**

| Beispiel | **IML** | | | | | |
|---|---|---|---|---|---|---|
| | PP | PE | PET/ PETE | PS | PVC | PC |
| 1 | +++ | +++ | +++ | +++ | +++ | +++ |
| 2 | +++ | +++ | +++ | +++ | +++ | +++ |
| 3 | +++ | +++ | +++ | +++ | +++ | +++ |
| 4 | +++ | +++ | ++ | ++ | ++ | ++ |
| 5 | +++ | +++ | +++ | ++ | ++ | ++ |
| | | | | | | |
| V1 | +++ | + | - | - | - | - |
| V2 | +++ | + | - | - | - | - |
| V3 | +++ | +++ | - | - | - | - |
| V4 | +++ | ++ | - | - | - | - |
| V5 | +++ | ++ | + | - | - | - |

**Tabelle 2**

| Beispiel | **Thermolabeling** | | | | | | | |
|---|---|---|---|---|---|---|---|---|
| | PP | PE | PET/ PETE | PS | PVC | PC | Glas | Weißblech/ Aluminium |
| 1 | +++ | +++ | +++ | +++ | +++ | +++ | +++ | +++ |
| 2 | +++ | +++ | +++ | +++ | +++ | +++ | +++ | +++ |
| 3 | +++ | +++ | +++ | +++ | +++ | +++ | +++ | +++ |
| 4 | +++ | ++ | ++ | ++ | ++ | ++ | +++ | +++ |
| 5 | +++ | ++ | ++ | ++ | ++ | ++ | +++ | +++ |
| | | | | | | | | |
| V1 | +++ | + | - | - | - | - | - | - |
| V2 | +++ | + | - | - | - | - | - | - |
| V3 | +++ | ++ | - | - | - | - | + | + |
| V4 | +++ | ++ | - | - | - | - | - | + |
| V5 | +++ | ++ | + | - | - | - | ++ | ++ |

| | | | | | | | | |
|---|---|---|---|---|---|---|---|---|
| Bewertungskriterien: +++ sehr gute Haftung >1,5N/15mm ++ gute Haftung >>0,5N/15mm + sehr schwache Haftung ≥0,5N/15mm - keinerlei Haftung | | | | | | | | |

## Patentansprüche

1. Etikettenfolie aus einer biaxial orientierten mehrschichtigen coextrudierten Polyolefinfolie aus einer Basisschicht und mindestens einer inneren Deckschicht, wobei die Basisschicht und die innere Deckschicht gemeinsam und gleichzeitig durch eine Mehrschichtdüse extrudiert und anschließend zusammen biaxial verstreckt werden, **dadurch gekennzeichnet, daß** diese innere Deckschicht mindestens 70 Gew.-% eines Co- oder Terpolymeren, welches mindestens aus Olefin und ungesättigter Carbonsäure oder deren Estern oder deren Anhydrid aufgebaut ist, und höchstens 30 Gew.-% eines Zusatzstoffes enthält, wobei sich die Angaben in Gew.-% jeweils auf das Gewicht der inneren Deckschicht beziehen.

2. Etikettenfolie gemäß Anspruch 1, **dadurch gekennzeichnet, daß** der Zusatzstoff ein Wachs ist, vorzugsweise ein Polyethylenwachs oder ein makrokristallines Paraffin (Paraffinwachs) oder eine mikrokristallines Wachs (Mikrowachs) ist und ein mittleres Molekulargewicht Mn (Zahlenmittel) Mn von 200 bis 5000, vorzugsweise 200 bis 1000 und das Wachs einen Schmelzpunkt von 70 bis 120°C aufweist.

3. Etikettenfolie gemäß Anspruch 1 und/oder 2, **dadurch gekennzeichnet, daß** das Wachs ein Polyethylenwachs mit einem Verhältnis von Gewichtsmittel zu Zahlenmittel Mw/Mn von 1 bis 2 ist und daß das Wachs in einer Menge von 0,5 bis 30 Gew.-% bezogen auf das Gewicht der Schicht enthalten ist.

4. Etikettenfolie gemäß einem oder mehreren der Ansprüche 1 bis 3, **dadurch gekennzeichnet, daß** der Zusatzstoff ein Polyolefin, ein Kohlenwasserstoffharz, Polystyrol, Polyester oder Polyamid, vorzugsweise ein ein Propylen-Co- oder Terpolymer, ein lineares und verzweigtes Polyethylen niedriger (LLDPE, LDPE), mittlerer oder hoher (HDPE) Dichte ist.

5. Etikettenfolie gemäß einem oder mehreren der Ansprüche 1 bis 4, **dadurch gekennzeichnet, daß** die innere Deckschicht 70 bis 99,5 Gew.-% des Co- oder Terpolymeren I enthält.

6. Etikettenfolie gemäß einem oder mehreren der Ansprüche 1 bis 5, **dadurch gekennzeichnet, daß** das Copolymer I mehr als 65 Gew.-% Olefineinheiten, vorzugsweise Ethyleneinheiten und höchstens 35 Gew.-% ungesättigte Monocarbonsäureeinheiten oder deren Estern, vorzugsweise Acrylsäure oder Methacrylsäure oder deren Ester enthält.

7. Etikettenfolie gemäß einem oder mehreren der Ansprüche 1 bis 6, **dadurch gekennzeichnet, daß** das Terpolymer I aus
(a) 65 bis 96 Gew.-% Olefin, vorzugsweise Ethylen und
(b) 3 bis 34 Gew.-% ungesättigte Carbonsäuren oder deren Estern, vorzugsweise Acrylsäure oder Methacrylsäure oder deren Ester und
(c) 1 bis 10 Gew.-% einer von (b) verschiedene ungesättigte Mono- oder Dicarbonsäuren oder deren Ester oder deren Anhydrid, vorzugsweise Maleinsäureanhydrid oder Glycidylmethacrylat aufgebraucht ist.

8. Etikettenfolie gemäß einem oder mehreren der Ansprüche 1 bis 7, **dadurch gekennzeichnet, daß** das die ungesättigte Carbonsäureeinheit (b) ein Acrylsäureester ist, vorzugsweise ein Acrylsäuremethyl, -ethyl-, -n-Propyl-, -i-Propyl-, n-Butyl-, i-Butyl-, sec-Butyl- oder tert.-Butylester ist.

9. Etikettenfolie gemäß einem oder mehreren der Ansprüche 1 bis 8, **dadurch gekennzeichnet, daß** die innere Deckschicht Antiblockmittel, vorzugsweise 1 bis 5 Gew.-%, enthält.

10. Etikettenfolie gemäß einem oder mehreren der Ansprüche 1 bis 9, **dadurch gekennzeichnet, daß** die innere Deckschicht ein Gleitmittel, vorzugsweise Erucasäureamid und/oder Polydimethylsiloxan enthält.

11. Etikettenfolie gemäß einem oder mehreren der Ansprüche 1 bis 10, **dadurch gekennzeichnet, daß** die innere Deckschicht eine Mischung aus zwei oder mehreren der Zusatzstoffe enthält, vorzugsweise Wachs in einer Menge von 1 bis 10 Gew.-% und HDPE in einer Menge von 1 bis 20 Gew.-%.

12. Etikettenfolie gemäß einem oder mehreren der Ansprüche 1 bis 11, **dadurch gekennzeichnet, daß** die innere Deckschicht Corona-, Plasma oder Flammbehandelt ist.

13. Etikettenfolie gemäß einem oder mehreren der Ansprüche 1 bis 12, **dadurch gekennzeichnet, daß** die Folie auf der der inneren Deckschicht gegenüberliegenden Seite der Basisschicht eine weitere äußere Deckschicht aufweist, welche aus Co-und/oder Terpolymeren II aufgebaut ist.

14. Etikettenfolie gemäß einem oder mehreren der Ansprüche 1 bis 13, **dadurch gekennzeichnet, daß** die Oberfläche der äußeren Deckschicht Corona-, Plasma- oder Flamm-behandelt ist.

15. Etikettenfolie gemäß einem oder mehreren der Ansprüche 1 bis 14, **dadurch gekennzeichnet, daß** die äußere Deckschicht Antiblockmittel, vorzugsweise SiO₂, enthält.

16. Etikettenfolie gemäß einem oder mehreren der Ansprüche 1 bis 15, **dadurch gekennzeichnet, daß** ein- oder beidseitige Zwischenschicht/en aus olefinischen Polymeren zwischen der Basis- und der/den Deckschicht/en angebracht ist/sind.

17. Etikettenfolie gemäß Anspruch 16, **dadurch gekennzeichnet, daß** diejenige Zwischenschicht, welche unterhalb der inneren Deckschicht angebracht ist Zusatzstoffe, vorzugsweise Wachse, Kohlenwasserstoffharz, Polystyrol, Polyester oder Polyamid, lineares oder verzweigtes Polyethylen niedriger (LLDPE, LDPE), mittlerer oder hoher (HDPE) Dichte, und gegebenenfalls Gleitmittel, Antistatika und/oder Antiblockmittel enthält.

18. Etikettenfolie gemäß einem oder mehreren der Ansprüche 1 bis 17, **dadurch gekennzeichnet, daß** die Dicke der Folie 15 bis 150 µm, insbesondere 25 bis 90 µm beträgt, wobei die Basisschicht etwa 40 bis 60 % der Gesamtdicke ausmacht.

19. Etikettenfolie gemäß einem oder mehreren der Ansprüche 1 bis 18, **dadurch gekennzeichnet, daß** die Basisschicht 70 bis 99 Gew.-% eines Propylenpolymeren, vorzugsweise Propylenhomopolymer, enthält.

20. Etikettenfolie gemäß einem oder mehreren der Ansprüche 1 bis 19, **dadurch gekennzeichnet, daß** die Basisschicht opak ist und vakuoleninitierende Füllstoffe und gegebenenfalls Pigmente enthält.

21. Etikettenfolie gemäß einem oder mehreren der Ansprüche 1 bis 20, **dadurch gekennzeichnet, daß** die opake Basisschicht 0,5 bis 30 Gew.-% vakuoleninitierende Füllstoffe und/oder 1 bis 10 Gew.-% Pigmente enthält.

22. Etikettenfolie gemäß einem oder mehreren der Ansprüche 1 bis 21, **dadurch gekennzeichnet, daß** die Basisschicht Gleitmittel und/oder Antistatikum, vorzugsweise tertiäres aliphatisches Amin, enthält.

23. Verfahren zur Herstellung eines etikettierten Behältnisses, **dadurch gekennzeichnet, daß** eine Etikettenfolie nach einem der Ansprüche 1 bis 22 mittels In Mould- oder Thermolabelling-Verfahren auf ein Behältnis aufgebracht wird und die innere Deckschicht dem Behältnis zugewandt ist und die gegenüberliegende Oberfläche die Sichtseite des Behälters bildet.

24. Verfahren nach Anspruch 23, **dadurch gekennzeichnet, daß** auf die Oberfläche der inneren Deckschicht der Etikettenfolie kein Kleber, keine Haftschicht und keine Beschichtung nach der Herstellung der Etikettenfolie und vor dem Etikettieren des Behälters aufgebracht wird.

25. Verfahren nach Anspruch 23, **dadurch gekennzeichnet, daß** das Behältnis aus thermoplastischem Kunststoff, vorzugsweise PP, PE, PS, PET PVC oder PC ist.

26. Verfahren nach Anspruch 23, 24 und/oder 25, **dadurch gekennzeichnet, daß** das Etikettierverfahren Thermolabelling ist und das Etikett mit seiner inneren Deckschicht bei einer Temperatur von über 50°C, wobei der Behälter und/oder das Etikett erwärmt werden, auf einen geformten Behälter aufgebracht wird, wobei das Etikett mittels Druck, Walzen oder Bürsten appliziert wird.

27. Verfahren zur Herstellung eines mehrschichtigen Verbundes, **dadurch gekennzeichnet, daß** eine biaxial orientierte mehrschichtige coextrudierte Polyolefinfolie gegen ein Substrat aus Papier laminiert oder kaschiert wird, wobei die Polyolefinfolie eine Basisschicht und mindestens einer inneren Deckschicht umfaßt, wobei die Basisschicht und die innere Deckschicht gemeinsam und gleichzeitig durch eine Mehrschichtdüse extrudiert und anschließend zusammen biaxial verstreckt werden, **dadurch gekennzeichnet, daß** diese innere Deckschicht mindestens 70 Gew.-% eines Co- oder Terpolymeren, welches mindestens aus Olefin und ungesättigter Carbonsäure oder deren Estern oder deren Anhydrid aufgebaut ist, und höchstens 30 Gew.-% eines Zusatzstoffes enthält, wobei sich die Angaben in Gew.-% jeweils auf das Gewicht der inneren Deckschicht beziehen.

## Claims

1. Label film made of a biaxially-oriented, multilayer, coextruded, polyolefin film of one base layer and at least one inner covering layer, wherein the base layer and the inner covering layer are simultaneously extruded together through a multilayer nozzle and subsequently biaxially stretched together, **characterised in that** this inner covering layer contains at least 70% by weight co- or terpolymer, which is made up of at least olefin and unsaturated carboxylic acid or its esters or its anydride, and contains at most 30% by weight of an additive, wherein the values in % by weight each relate to the weight of the inner covering layer

2. Label film according to claim 1, **characterised in that** the additive is a wax, preferably a polyethylene wax or a macrocrystalline paraffin (paraffin wax) or a microcrystalline wax (microwax) and has an average molecular weight Mn (number average) Mn of 200 to 5000, preferably 200 to 1000 and the wax has a melting point of 70 to 120°C.

3. Label film according to claim 1 and/or 2, **characterised in that** the wax is a polyethylene wax with a ratio of weight average to number average Mw/Mn of 1 to 2 and that the wax is contained in a quantity of 0.5 to 30% by weight relative to the weight of the layer.

4. Label film according to one or several of the claims 1 to 3, **characterised in that** the additive is a polyolefin, a hydrocarbon resin, polystyrene, polyester or polyamide, preferably a propylene-co- or terpolymer, a linear and branched polyethylene of low (LLDPE, LDPE), middle or high (HDPE) density.

5. Label film according to one or several of the claims 1 to 4, **characterised in that** the inner covering layer contains 70 to 99.5% by weight co- or terpolymer I.

6. Label film according to one or several of the claims 1 to 5, **characterised in that** the copolymer I contains more than 65% by weight olefin units, preferably ethylene units and at most 35% by weight unsaturated monocarboxylic acid units or their esters, preferably acrylic acid or methacrylic acid or their esters.

7. Label film according to one or several of the claims 1 to 6, **characterised in that** the terpolymer I is put together out of
(a) 65 to 96% by weight olefin, preferably ethylene and
(b) 3 to 34% by weight unsaturated carboxylic acids or their esters, preferably acrylic acid or methacrylic acid or its ester and
(c) 1 to 10% by weight an unsaturated mono- or dicarboxylic acid different from (b), or its ester or its anhydride, preferably maleic acid anhydride or glydicyl methacrylate.

8. Label film according to one or several of the claims 1 to 7, **characterised in that** the unsaturated carboxylic acid unit (b) is an acrylic acid ester, preferably an acrylic acid methyl, -ethyl-, -n-propyl-, -i-propyl-, n-butyl-, i-butyl-, sec-butyl- or tert.-butyl ester.

9. Label film according to one or several of the claims 1 to 8, **characterised in that** the inner covering layer contains anti-blocking agent, preferably 1 to 5% by weight.

10. Label film according to one or several of the claims 1 to 9, **characterised in that** the inner covering layer contains a lubricant, preferably erucic acid amide and/or polydimethylsiloxane.

11. Label film according to one or several of the claims 1 to 10, **characterised in that** the inner covering layer contains a mixture of two or several of the additives, preferably wax in a quantity of 1 to 10% by weight and HDPE in a quantity of 1 to 20% by weight.

12. Label film according to one or several of the claims 1 to 11, **characterised in that** the inner covering layer is corona, plasma or flame-treated.

13. Label film according to one or several of the claims 1 to 12, **characterised in that** the film has another covering layer on the side of the base layer opposite to the inner covering layer, which is made up of co- and/or terpolymers II.

14. Label film according to one or several of the claims 1 to 13, **characterised in that** the surface of the outer covering layer is corona, plasma or flame-treated.

15. Label film according to one or several of the claims 1 to 14, **characterised in that** the outer covering layer contains anti-blocking agent, preferably SiO₂.

16. Label film according to one or several of the claims 1 to 15, **characterised in that** single or double-sided intermediate layer(s) of olefinic polymers is/are attached between the base and covering layer(s).

17. Label film according to claim 16, **characterised in that** the very intermediate layer which is attached below the inner covering layer contains additives, preferably wax, hydrocarbon resin, polystyrene, polyester or polyamide, linear or branched polyethylene of low (LLDPE, LDPE), middle or high (HDPE) density, and, if necessary, lubricant, antistatic agents and/or anti-blocking agent.

18. Label film according to one or several of the claims 1 to 17, **characterised in that** the thickness of the film comes to 15 to 150 µm, in particular 25 to 90 µm, wherein the base layer makes up 40 to 60% of the total thickness.

19. Label film according to one or several of the claims 1 to 18, **characterised in that** the base layer contains 70 to 99% propylene polymer, preferably propylene homopolymer.

20. Label film according to one or several of the claims 1 to 19, **characterised in that** the base layer is opaque and contains vacuole-initiating fillers and, if necessary, pigments.

21. Label film according to one or several of the claims 1 to 20, **characterised in that** the opaque base layer contains 0.5 to 30% by weight vacuole-initiating fillers and/or 1 to 10% by weight pigments.

22. Label film according to one or several of the claims 1 to 21, **characterised in that** he base layer contains lubricant and/or antistatic agent, preferably a tertiary aliphatic amine.

23. Method for producing a labelled container, **characterised in that** a label film according to one of the claims 1 to 22 is attached by means of an in-mould or thermolabelling method to a container, and is facing the inner covering layer of the container and forms the opposite surface of the visible side of the container.

24. Method according to claim 23, **characterised in that** no adhesive, no undercoating and no lamination is applied on the surface of the inner covering layer of the label film after production of the label film and before labelling of the container.

25. Method according to claim 23, **characterised in that** the container is made of synthetic thermoplastic, preferably PP, PE, PS, PET PVC or PC.

26. Method according to claim 23, 24 and/or 25, **characterised in that** the labelling method is thermolabelling and - at a temperature of over 50°C, wherein the container and/or the label are heated - the label with its inner covering layer is attached to a formed container, wherein the label is applied by means of pressure, rollers or brushes.

27. Method for the production of a multilayer composite, **characterised in that** a biaxially-oriented, multilayer, coextruded, polyolefin film is laminated or coated against a paper substrate, wherein the polyolefin film comprises a base layer and at least one inner covering layer, wherein the base layer and the inner covering layer are simultaneously extruded together through a multilayer nozzle and subsequently biaxially stretched together, **characterised in that** this inner covering layer contains at least 70% by weight of a co- or terpolymer which is made up of at least olefin and unsaturated carboxylic acid or its esters or its anhydride, and contains at most 30% by weight of an additive, wherein the values in % by weight each relate to the weight of the inner covering layer.

## Revendications

1. Film pour étiquettes constitué d'un film de polyoléfine multicouches coextrudé orienté biaxialement, présentant une couche de base et au moins une couche de couverture interne, la couche de base et la couche de couverture interne étant extrudées conjointement et parallèlement à l'aide d'une buse multicouches puis étirées biaxialement de façon conjointe, **caractérisé en ce que** cette couche de couverture interne contient au moins 70 % en poids d'un copolymère ou terpolymère composé au moins à partir d'oléfine et d'acide carboxylique insaturé ou de son ester ou son anhydride, et d'au plus 30 % en poids d'un additif, les indications en pourcentage en poids se rapportant respectivement au poids de la couche de couverture interne.

2. Film pour étiquettes selon la revendication 1, **caractérisé en ce que** l'additif est une cire, de préférence une cire de polyéthylène ou de la paraffine macrocristalline (cire paraffinique) ou de la cire microcristalline (micro-cire) dont la masse moléculaire moyenne Mn (masse moléculaire en nombre) est comprise entre 200 et 5000 Mn, préférablement entre 200 et 1000, et dont le point de fusion oscille entre 70 et 120 °C.

3. Film pour étiquettes selon la revendication 1 et/ou 2, **caractérisé en ce que** la cire est une cire de polyéthylène dont le rapport Mw/Mn (masse moléculaire moyenne en poids/masse moléculaire moyenne en nombre) est compris entre 1 et 2 et se situe dans une gamme comprise entre 0,5 et 30 % en poids par rapport au poids de la couche.

4. Film pour étiquettes selon une ou plusieurs des revendications 1 à 3, **caractérisé en ce que** l'additif est une polyoléfine, une résine d'hydrocarbure, un polystyrol, un polyester ou un polyamide, de préférence un copolymère ou terpolymère de propylène, un polyéthylène linéaire et ramifié de basse densité (LLDPE, LDPE), ou de densité moyenne ou élevée (HDPE).

5. Film pour étiquettes selon une ou plusieurs des revendications 1 à 4, **caractérisé en ce que** la couche de couverture interne contient de 70 à 99,5 % en poids du copolymère ou terpolymère I.

6. Film pour étiquettes selon une ou plusieurs des revendications 1 à 5, **caractérisé en ce que** le copolymère I contient plus de 65 % en poids d'unités d'oléfines, préférablement des unités d'éthylène, et au plus 35 % en poids d'unités d'acide monocarboxylique insaturé ou de son ester, de préférence de l'acide acrylique ou méthacrylique ou son ester.

7. Film pour étiquettes selon une ou plusieurs des revendications 1 à 6, **caractérisé en ce que** le terpolymère I est constitué de
(a) 65 à 96 % en poids d'oléfine, préférablement de l'éthylène et
(b) 3 à 34 % en poids d'acide carboxylique insaturé ou de son ester, préférablement de l'acide acrylique ou de l'acide méthacrylique ou son ester et
(c) 1 à 10 % en poids d'un acide monocarboxylique ou dicarboxylique insaturé autre que (b) ou son ester ou son anhydride, préférablement un anhydride d'acide maléique ou du méthacrylate de glycidyle.

8. Film pour étiquettes selon une ou plusieurs des revendications 1 à 7, **caractérisé en ce que** l'unité d'acide carboxylique insaturé (b) est un ester d'acide acrylique, de préférence un ester de méthyle, d'éthyle, de n-propyle, i-propyle, n-butyle, i-butyle, sec-butyle ou tert-butyle.

9. Film pour étiquettes selon une ou plusieurs des revendications 1 à 8, **caractérisé en ce que** la couche de couverture interne contient des agents antibloquants, de préférence entre 1 et 5 % en poids.

10. Film pour étiquettes selon une ou plusieurs des revendications 1 à 9, **caractérisé en ce que** la couche de couverture interne contient un agent lubrifiant, de préférence de l'amide acide érucique et/ou du polydiméthylsiloxane.

11. Film pour étiquettes selon une ou plusieurs des revendications 1 à 10, **caractérisé en ce que** la couche de couverture interne contient un mélange constitué à partir de deux additifs ou plus, préférablement de la cire selon une quantité comprise entre 1 et 10 % en poids et du HDPE selon une quantité comprise entre 1 et 20 % en poids.

12. Film pour étiquettes selon une ou plusieurs des revendications 1 à 11, **caractérisé en ce que** la couche de couverture interne a été traitée par décharge à effet de couronne, au plasma ou à la flamme.

13. Film pour étiquettes selon une ou plusieurs des revendications 1 à 12, **caractérisé en ce que** le film, au niveau de la face de la couche de base opposée à la couche de couverture interne présente une autre couche de couverture externe, composée de copolymères et/ou terpolymères II.

14. Film pour étiquettes selon une ou plusieurs des revendications 1 à 13, **caractérisé en ce que** la surface de la couche de couverture externe a été traitée par décharge à effet de couronne, au plasma ou à la flamme.

15. Film pour étiquettes selon une ou plusieurs des revendications 1 à 14, **caractérisé en ce que** la couche de couverture externe contient un agent antibloquant, de préférence du SiO2.

16. Film pour étiquettes selon une ou plusieurs des revendications 1 à 15, **caractérisé en ce qu'**une/plusieurs couche(s) intermédiaire(s) composée(s), sur un seul ou deux côtés, de polymères oléfiniques, est/sont positionnée(s) entre la couche de base et la/les couche(s) de couverture.

17. Film pour étiquettes selon la revendication 16, **caractérisé en ce que** la couche intermédiaire positionnée sous la couche de couverture interne contient des additifs, préférablement de la cire, de la résine d'hydrocarbure, du polystyrol, du polyester ou du polyamide, un polyéthylène linéaire ou ramifié de basse densité (LLDPE, LDPE), ou de densité moyenne ou élevée (HDPE), et le cas échéant des agents lubrifiants, des matériaux antistatiques et/ou des agents antibloquants.

18. Film pour étiquettes selon une ou plusieurs des revendications 1 à 17, **caractérisé en ce que** l'épaisseur du film est comprise entre 15 et 150 µm, plus particulièrement entre 25 et 90 µm, la couche de base représentant environ 40 à 60 % de l'épaisseur totale.

19. Film pour étiquettes selon une ou plusieurs des revendications 1 à 18, **caractérisé en ce que** la couche de base contient entre 70 et 99 % en poids d'un polymère de propylène, de préférence un homopolymère de propylène.

20. Film pour étiquettes selon une ou plusieurs des revendications 1 à 19, **caractérisé en ce que** la couche de base est opaque et contient des charges à l'origine de vacuoles, ainsi que, le cas échéant, des pigments.

21. Film pour étiquettes selon une ou plusieurs des revendications 1 à 20, **caractérisé en ce que** la couche de base opaque contient entre 0,5 et 30 % en poids de charges à l'origine de vacuoles et/ou entre 1 et 10 % en poids de pigments.

22. Film pour étiquettes selon une ou plusieurs des revendications 1 à 21, **caractérisé en ce que** la couche de base contient un agent lubrifiant et/ou un matériau antistatique, préférablement un amine aliphatique tertiaire.

23. Procédé de fabrication d'un conteneur étiqueté, **caractérisé en ce qu'**un film pour étiquettes est appliqué sur un conteneur, selon l'une des revendications 1 à 22, via un procédé d'étiquetage dans le moule (« in mould ») ou d'étiquetage thermique, la couche de couverture interne est tournée vers le conteneur et la surface opposée forme le côté visible du conteneur.

24. Procédé selon la revendication 23, **caractérisé en ce qu'**aucun matériau adhésif, aucune couche adhésive ni aucun revêtement n'est appliqué(e) à la surface de la couche de couverture interne du film pour étiquettes à l'issue de sa fabrication, et avant d'étiqueter le conteneur.

25. Procédé selon la revendication 23, **caractérisé en ce que** le conteneur est constitué d'un matériau thermoplastique, préférablement du PP, PE, PS, PET PVC ou du PC.

26. Procédé selon la revendication 23, 24 et/ou 25, **caractérisé en ce que** le procédé d'étiquetage est un procédé thermique et **en ce que** l'étiquette et sa couche de couverture interne sont apposées sur un conteneur moulé, à une température de plus de 50 °C, température à laquelle le conteneur et/ou l'étiquette sont chauffés, l'étiquette étant appliquée par l'intermédiaire d'une presse, de rouleaux ou de brosses.

27. Procédé de fabrication d'un assemblage constitué de plusieurs couches, **caractérisé en ce qu'**un film de polyoléfine multicouches coextrudé orienté biaxialement est laminé et contrecollé contre un substrat de papier, le film de polyoléfine englobant une couche de base et au moins une couche de couverture interne, la couche de base et la couche de couverture interne étant extrudées conjointement et parallèlement à l'aide d'une buse multicouches puis étirées biaxialement de façon conjointe, **caractérisé en ce que** cette couche de couverture interne contient au moins 70 % en poids d'un copolymère ou terpolymère composé au moins à partir d'oléfine et d'acide carboxylique insaturé ou de son ester ou son anhydride, et d'au plus 30 % en poids d'un additif, les indications en pourcentage en poids se rapportant respectivement au poids de la couche de couverture interne.
